(19) Europäisches Patentamt

European Patent Office

Office européen des brevets

(11) **EP 0 555 110 B2**

(12) **NOUVEAU FASCICULE DE BREVET EUROPEEN**

(45) Date de publication et mention de la décision concernant l'opposition:
**02.02.2005 Bulletin 2005/05**

(45) Mention de la délivrance du brevet:
**09.08.1995 Bulletin 1995/32**

(21) Numéro de dépôt: **93400042.3**

(22) Date de dépôt: **11.01.1993**

(51) Int Cl.7: **C01B 21/24**, C01B 21/36

(54) **Procédé d'oxydation thermochimique de l'oxyde de diazote**

Verfahren zur thermochemischen Oxidation von Distickstoffmonoxid

Process for thermochemical oxidation of nitrous oxide

(84) Etats contractants désignés:
**DE FR GB**

(30) Priorité: **07.02.1992 FR 9201413**

(43) Date de publication de la demande:
**11.08.1993 Bulletin 1993/32**

(73) Titulaire: **Clariant (France)**
**92800 Puteaux (FR)**

(72) Inventeurs:
• **Alarcon, Jean-Michel**
**F-60350 Trosly Breuil (FR)**
• **Gonzalez-Flesca, Norbert**
**F-93600 Aulnay-Sous-Bois (FR)**

(74) Mandataire: **Santarelli**
**14, avenue de la Grande Armée**
**75017 Paris (FR)**

(56) Documents cités:
**GB-A- 325 475**      **JP-A- 61 257 940**

• **DATABASE WPIL Week 8652, Derwent Publications Ltd., London, GB; AN 86-343366/52 & JP-A-61 257 940 (ASAHI CHEMICAL IND KK) 15 Novembre 1985.**
• **F.A.COTTON, G.WILKINSON 'Basic Inorganic Chemistry' , JOHN WILEY & SONS , NEW YORK**
• **Note technique de la NASA publiée en Novembre 1962.**
• **Note technique de la NASA publiée en Mai 1963.**
• **SR 1 Pep Report 127 A1 (1980) p.79-93**
• **SR 1 Pep Report Nr. 54 B (1987) p. 45-65**
• **"Aspects physiques et chimiques de la Combustion" (1976) editions echnip, G. de Soete, A. Feugier**

Remarques:
Le dossier contient des informations techniques présentées postérieurement au dépôt de la demande et ne figurant pas dans le présent fascicule.

**Description**

La présente invention concerne un procédé de décomposition thermochimique de l'oxyde de diazote.

L'oxydation nitrique de divers substrats organiques libère divers oxydes d'azote dont certains peuvent être aisément valorisés ou détruits tels que le monoxyde d'azote, le dioxyde d'azote, ou le tétraoxyde diazote. Mais d'autres oxydes d'azote, notamment le monoxyde de diazote, ne sont pas directement recyclables.

L'oxyde de diazote $N_2O$, à la température ambiante, est un gaz stable, ne se combinant pratiquement pas à l'oxygène moléculaire, et résistant bien à l'action des oxydants classiques. A hautes températures, c'est un comburant remarquable cédant facilement son oxygène et libérant de l'azote moléculaire avec un fort dégagement de chaleur.

Certaines réactions chimiques telles que l'oxydation nitrique de l'acétaldéhyde en glyoxal ou l'oxydation nitrique de la cyclohexanone en acide adipique libèrent de grandes quantités d'oxyde de diazote.

Il est donc d'un grand intérêt industriel de pouvoir transformer cet oxyde de diazote en des oxydes d'azote de degré d'oxydation supérieur en vue de leur valorisation notamment pour la fabrication d'acide nitrique.

Il est connu par la demande de brevet japonais N° 61-257.940, un procédé de décomposition thermique permettant de transformer en oxyde d'azote les sous-produits gazeux ($N_2O$, $NO$, $NO_2$) formés lors de l'oxydation nitrique de la cyclohexanone et/ou du cyclohexanol en acide adipique, procédé qui doit être mis en oeuvre impérativement dans un réacteur piston après avoir abaissé la somme des concentrations en $NO$ et en $NO_2$ dans le mélange gazeux de départ à moins de 10 %.

Or, afin de s'affranchir de cette double exigence qui nécessite une technologie complexe, la demanderesse a découvert avec étonnement un procédé permettant de transformer l'oxyde de diazote en produits de formule (I)

$$NO_x \tag{I}$$

dans laquelle x représente 1 ou 2.

Le procédé selon la présente invention est un procédé d'oxydation thermochimique dans lequel on traite à la flamme l'oxyde de diazote, puis l'on récupère les produits de formule générale (I) formés.

La flamme est obtenue par combustion classique d'un mélange de gaz comburants et combustibles choisis dans le groupe constitué par l'oxygène moléculaire, l'oxyde de diazote, le gaz naturel, les alcanes inférieurs associés généralement à un ballast constitué par de l'azote moléculaire.

Le mélange gazeux contenant l'oxyde de diazote est injecté, soit dans la flamme, soit dans les gaz chauds issus de la flamme. Dans ce dernier cas, l'injection est appelée injection en post combustion.

Le procédé ci-dessus est particulièrement applicable à des mélanges gazeux, notamment des effluents industriels renferment de l'oxyde de diazote.

Il est connu que le monoxyde d'azote, $NO$, à la température ambiante, au contact d'oxygène, s'oxyde quantitativement, immédiatement et exothermiquement en dioxyde d'azote, $NO_2$. Mais cette réaction est équilibrée et il est admis qu'à la pression atmosphérique, au dessus de 620°C, un mélange d'oxygène et de $NO$ peut rester sans donner lieu à la moindre réaction. Par contre, à la température ambiante, la réaction est complète et il n'existe pratiquement plus de $NO$. Il est également connu que le dioxyde d'azote se dimérise en tétraoxyde de diazote et que cette dimérisation est d'autant plus complète que la température est plus basse. A la température et à la pression ambiantes, le dioxyde d'azote est presque entièrement dimérisé en $N_2O_4$ se dissolvant très rapidement dans l'eau en donnant de l'acide nitrique et de l'acide nitreux.

Le procédé selon l'invention, consomme entièrement l'oxyde de diazote. En effet les gaz, après traitement à la flamme , ne contiennent pratiquement plus d'oxyde de diazote. On pense qu'à la température de la flamme, l'oxyde de diazote se décompose notamment en oxygène atomique, en monoxyde d'azote et en azote moléculaire.

Le procédé selon la présente invention peut être avantageusement mis en oeuvre en continu dans un four équipé d'un brûleur, d'une ou plusieurs chambres de confinement, et d'un dispositif d'injection de l'effluent à traiter. A la sortie de la ou des chambres de confinement, les gaz sont refroidis à la température ambiante, puis les produits de formule générale (I) sont récupérés, avantageusement par absorption dans une tour de lavage dans laquelle circule de l'acide nitrique dilué.

Il est avantageux que le procédé de la présente invention soit mis en oeuvre à la pression atmosphérique.

Les exemples suivants illustrent le procédé de la présente invention.

Le four utilisé dans ces exemples est un four cylindrique, vertical, d'un diamètre intérieur de 1300 mm et d'une hauteur de 3500 mm. Il présente une puissance de 1 Mw et il est garni de matière réfractaire. Le brûleur est à turbulence à élément réglable, nommé swirl, du type polycombustible à double entrée d'air. Les chambres de confinement, au nombre de trois, sont cylindriques, verticales, garnies de réfractaire : l'élément haut est équipé d'un brûleur, de l'ouvreau, du dispositif d'allumage et de la cellule de détection de flamme ; l'élément du milieu contient un dispositif d'injection à tubes d'alumine noyés dans la matière réfractaire et l'élément du bas est simple. L'ensemble des chambres de confinement mesure 1400 mm de hauteur et a un diamètre inférieur à 450 mm. Les débits des gaz sont déterminés, soit avec un rotamètre, soit avec un compteur volumétrique, soit enfin, avec un venturi. Les gaz, après réaction, sont analysés avec un analyseur à absorption infrarouge pour l'oxyde de carbone, le dioxyde de carbone et l'oxyde de diazote, et avec un analyseur paramagnétique pour l'oxygène. Les gaz de formule générale (I) sont dosés par acidimétrie après oxydation avec de l'oxygène, puis avec du peroxyde d'hydrogène.

Le rendement de destruction de l'oxyde de diazote est calculé comme suit :

$$ R\ (\%) = 100 \left[ 1 - \left( \frac{[N_2O]^*DT}{[N_2O]\ DE} \right) \right] \qquad (equ.1) $$

Le rendement de la conversion de $N_2O$ en $NO_x$ (exprimé en $N_2O$) est calculé comme suit :

$$ T\ (\%) = 100\ \frac{[NO_x]^*DT}{[N_2O]DE} \qquad (equ.2) $$

$[N_2O]^*$ :    concentration en oxyde de diazote après réaction
$[N_2O]$ :    concentration en oxyde de diazote avant réaction
$[NO_x]^*$ :    concentration en $NO_x$ (exprimé en $NO_2$) après réaction
DT :    débit total des gaz entrant dans le réacteur
DE :    débit de l'effluent gazeux.
NM :    non mesurable ; concentration inférieure ou égale à 100 ppmv.

Les débits des gaz sont exprimés en mètre cube par heure à la pression atmosphérique et à 20 °C.
La concentration des divers gaz après réaction est exprimée en pourcentages volumiques sauf pour l'oxyde de diazote non transformé qui est exprimé en ppm volumique.
La flamme est produite par la combustion de gaz naturel dans de l'air.
Les exemples 1 à 9 sont rassemblés dans le tableau 1.

## TABLEAU I

## Exemples 1 - 9

| | Conditions expérimentales | | | | Analyse des gaz après réaction | | | | | Calculs | | |
|---|---|---|---|---|---|---|---|---|---|---|---|---|
| | Débit gaz naturel m3/h | Débit Air m3/h | Débit N2O m3/h | Débit N2 m3/h | CO2 % v | CO % v | O2 % v | N2O ppm/v | NOx % v | Débit DT m3/h | R (%) | T (%) |
| 1 | 16 | 147 | 170 | 10 | 4 | 0 | 17 | NM | 3 | 396 | 100 | 7 |
| 2 | 15,2 | 113 | 240 | 21 | 3,7 | 0 | 16,5 | 80 | 2,7 | 479 | 100 | 5,4 |
| 3 | 67 | 657 | 123 | 0 | 9 | 0 | 6,6 | NM | 1 | 774 | 100 | 6,3 |
| 4 | 20,5 | 204 | 105 | 9,3 | 6,7 | 0 | 11,45 | NM | 3,7 | 350 | 100 | 12,3 |
| 5 | 20,7 | 204 | 93 | 9,5 | 6,7 | 0 | 11,52 | NM | 3,9 | 332 | 100 | 14,0 |
| 6 | 25,1 | 258 | 65 | 41 | 7,2 | 0 | 7,8 | NM | 2,8 | 372 | 100 | 16,0 |
| 7 | 25,2 | 252 | 30 | 41 | 8,6 | 0 | 4,7 | NM | 2,25 | 312 | 100 | 23,6 |
| 8 | 20,7 | 214,5 | 25,7 | 41 | 7 | 0 | 6,7 | NM | 2,25 | 273 | 100 | 23,9 |
| 9 | 40,4 | 402 | 32,5 | 38,5 | 9,2 | 0 | 3,6 | NM | 2,35 | 449 | 100 | 32,4 |

**Revendications**

**1.** Procédé de décomposition thermochimique de l'oxyde de diazote en produits de formule (I)

$$NO_x \qquad (I)$$

x représentant 1 ou 2, **caractérisé en ce que** l'on traite à la flamme l'oxyde de diazoteà décomposer en injectant ledit oxyde de diazote à décomposer dans la flamme ou en post-combustion, ladite flamme étant obtenue par combustion classique d'un mélange de gaz comburants et combustibles choisis dans le groupe constitué par l'oxygène moléculaire, l'oxyde de diazote, le gaz naturel et les alcanes inférieurs, puis l'on récupère les produits de formule (I) formés.

**2.** Procédé selon la revendication 1, **caractérisé en ce que** l'oxyde de diazote à décomposer est un des composants d'un mélange gazeux.

**3.** Procédé selon la revendication 2, **caractérisé en ce que** le mélange gazeux est un effluent industriel.

**Patentansprüche**

**1.** Verfahren zur thermochemischen Zersetzung von Distickstoffoxid zu Produkten der Formel (I)

$$NO_x \tag{I},$$

wobei x 1 oder 2 bedeutet, bei dem man das zu zersetzende Distickstoffoxid flammbehandelt, indem das zu zersetzende Distickstoffoxid in die Flamme oder in eine Nachverbrennung injiziert wird, wobei die Flamme durch klassische Verbrennung einer Mischung von Sauerstoffträgergasen und Brennstoffen, ausgewählt aus der Gruppe, bestehend aus molekularem Sauerstoff, Distickstoffoxid, Erdgas und niedrigen Alkanen erhalten wird, und man dann die gebildeten Produkte der Formel (I) gewinnt.

**2.** Verfahren nach Anspruch 1, **dadurch gekennzeichnet, dass** das zu zersetzende Distickstoffoxid eine der Komponenten einer gasförmigen Mischung ist.

**3.** Verfahren nach Anspruch 2, **dadurch gekennzeichnet, dass** die gasförmige Mischung ein Industrieausfluss ist.

**Claims**

**1.** Process for the thermochemical decomposition of dinitrogen oxide to products of formula (I)

$$NO_x \tag{I}$$

x representing 1 or 2, **characterized in that** the dinitrogen oxide to be decomposed is flame-treated by injection of said dinitrogen oxide to be decomposed into the flame or by post-combustion injection, said flame being obtained by conventional combustion of a mixture of oxidizing and combustible gases chosen from the group constituted by molecular oxygen, dinitrogen oxide, natural gas and lower alkanes, then the products of formula (I) formed are recovered.

**2.** Process according to claim 1, **characterized in that** the dinitrogen oxide to be decomposed is one of the components of a gas mixture.

**3.** Process according to claim 2, **characterized in that** the gas mixture is an industrial effluent.